# EUROPEAN PATENT APPLICATION

(11) **EP 1 681 816 A1**
(43) Date of publication of application: **19.07.2006**
(21) Application number: 06250131.7
(22) Date of filing: 11.01.2006
(51) Int. Cl.: H04L 12/56

(54) **Automated backhaul network control for supporting multiplexed control traffic and bearer traffic in a wireless communication system**

(30) Priority: 13.01.2005 US 35407
(71) Applicant: LUCENT TECHNOLOGIES INC., Murray Hill, New Jersey 07974-0636 (US)
(72) Inventor: Chen, Ina Z., Little Neck, NY 11362 (US); Ding, Ling, Bedminster New Jersey 07921 (US); Kraml, Mark H., Flanders New Jersey 07836 (US); Rubin, Harvey, Morristown New Jersey 07960§ (US); Yang, Yang, Parsippany New Jersey 07054 (US)
(74) Representative: Sarup, David Alexander

(57) **Abstract**

A wireless communication system (20) includes a wireless network (22) that communicates with a plurality of base stations (24) over a backhaul network (26). A disclosed example includes monitoring an amount of control traffic on the backhaul network (26) and dynamically and automatically adjusting an allocation of the backhaul resource for handling the control traffic. A disclosed example automatically allocates a remaining amount of the backhaul resource for handling bearer traffic.

## Description

### Field of the Invention

This invention generally relates to telecommunications. More particularly, this invention relates to wireless communication systems.

### Description of the Related Art

Wireless communication systems are well known and in widespread use. Geographical regions are divided into so-called cells, each of which typically has at least one base station for relaying communications between a mobile station (i.e., a cell phone) and a wireless communication network. A variety of control information must be exchanged between the mobile station, the base station and the wireless communication network. Control and signaling information is important for a variety of known purposes.

Known systems include a backhaul network that transports wireless user or bearer traffic and signaling or network control traffic between base stations and other appropriate portions of the wireless communication network such as a radio network controller. Known backhaul networks are circuit based and use channelized connections such as T1, for example. Such backhaul networks are segmented into control traffic portions and bearer traffic portions. A significant shortcoming of such arrangement is that each portion of the backhaul resource is not useable for traffic from the other portion. Such rigid segmentation results in non-robust and inefficient use of the backhaul resource.

In known systems, a certain amount of the backhaul resource is allocated to the signaling or control traffic. This allocation occurs during a design phase and includes a *priori* estimation of the anticipated necessary bandwidth for carrying the control traffic. Such an estimation cannot possibly be well-suited for the various and changing control traffic conditions. Typically, more than enough bandwidth must be allocated to accommodate heavier control traffic loads than will occur most of the time. As a result, a significant portion of the possible available bandwidth goes essentially unused. This reduces the available bandwidth for carrying bearer traffic, for example.

One challenge facing designers of such systems is how to allocate backhaul resources to control traffic and bearer traffic, respectively. Bearer traffic tends to be more continuous and has different latency requirements, for example, compared to control traffic. The control traffic tends to be more bursty in nature. Additionally, the control traffic requires maximum robustness to avoid the significant consequences associated with dropping a control traffic packet, for example. Accordingly, addressing the different quality characteristics of each type of traffic must also be accommodated when designing a backhaul network.

More recently, it has been proposed to use a packet switched network such as an internet protocol network as the backhaul network for a wireless communication system. With such arrangements, the control traffic and the bearer traffic can be multiplexed such that the rigid segmentation mentioned above is no longer necessary. There is a challenge, however, to designing a system to efficiently and robustly transport the control traffic and the bearer traffic.

For example, if too much of the backhaul resource is reserved for control traffic, that may lead to undesirably low efficiency for carrying bearer traffic on the backhaul network. On the other hand, if too little of the backhaul resource is reserved for control traffic, that may lead to control transport congestion and a degradation of system performance.

There is a need for an arrangement to efficiently use a backhaul network for efficiently and robustly transporting bearer traffic and control traffic. This invention addresses that need.

### SUMMARY OF THE INVENTION

An exemplary method of communicating includes automatically adjusting an allocation of a backhaul resource for handling control traffic.

In one example, the method includes monitoring the amount of control traffic and determining an amount of the backhaul resource for handling an amount of control traffic corresponding to the monitored amount. The allocation of the backhaul resource for handling the control traffic can then be adjusted to correspond to the determined amount.

In one example, the control traffic is multiplexed with bearer traffic such as voice or data. In one example, once the appropriate allocation for control traffic is made, the remaining bandwidth of the backhaul network is available for bearer traffic. One example includes rejecting any new call requests that could cause backhaul overload based on the current bearer traffic load and the allocations.

The various features and advantages of this invention will become apparent to those skilled in the art from the following detailed description. The drawing that accompanies the detailed description can be briefly described as follows.

### BRIEF DESCRIPTION OF THE DRAWING

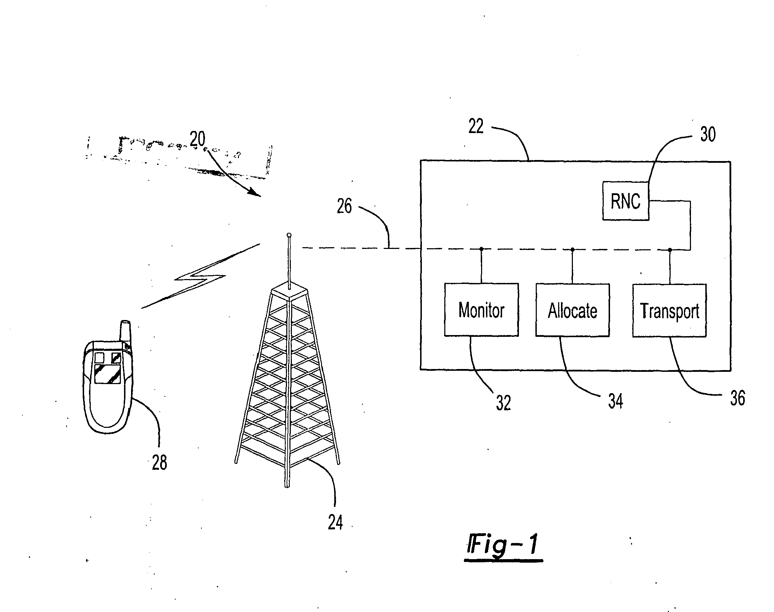

Figure 1 schematically illustrates selected portions of a wireless communication network including a backhaul resource allocation designed according to an embodiment of this invention.

### DETAILED DESCRIPTION

Figure 1 schematically shows a wireless communication system 20. A wireless communication network 22 communicates with a plurality of base stations 24 (only one is illustrated) using a backhaul network 26. As known, the base stations 24 communicate with one or more mobile stations 28, which may comprise a variety of known devices.

The backhaul network 26 allows for bearer traffic communication between the base station 24 and the wireless network 22. Bearer traffic, as used in this description, refers to communications of voice, data, video or a combination of these as intended by a subscriber or user of a mobile station.

The backhaul network 26 also facilitates control traffic communication between the base stations 24 and the wireless network 22. Control traffic, as used in this description, refers to control messages and signaling used by one or more of a mobile station, base station or an appropriate portion of the communication network 22 such as a radio network controller 30. A variety of known control signals and messages may be communicated over the backhaul network 26.

In one example, the backhaul network 26 is a packet switched network. One example uses internet protocol on the backhaul network. The transport facility associated with the backhaul network 26 in one example is unchannelized and includes a transport mechanism such as Ethernet or SONET, for example. Such transport mechanisms are known.

The backhaul network 26 has a certain capacity or bandwidth, which is referred to in this description as the backhaul resource. The illustrated example includes the ability to automatically allocate at least some of the backhaul resource for handling control traffic and a remainder for handling bearer traffic and allows for the two traffic types to be multiplexed along the backhaul network 26.

The illustrated example includes a monitoring module 32 that monitors an amount of control traffic associated with each backhaul facility interface. Known techniques for monitoring the amount of traffic are used in one example. Given this description, and the type of backhaul network used for a given situation, those skilled in the art will be able to develop a monitoring module 32 for monitoring the amount of control traffic.

In the illustrated example, the monitoring module 32 dynamically and automatically estimates the bandwidth required for carrying the current control traffic load to achieve a desired quality of service for the control traffic. Example quality of service requirements include avoiding excess latency and avoiding any dropped signaling or control messages.

The illustrated example includes an allocation module 34 that allocates or reserves an appropriate amount of the backhaul resource for carrying the control traffic based on the dynamic estimates from the monitoring module 32. The amount of backhaul resource allocated for carrying control traffic in one example corresponds to but is not necessarily identical to the automatically generated estimate of bandwidth provided by the monitoring module 32.

In one example, the allocation module 34 updates the allocation of the backhaul resource for handling control traffic on a preselected periodic basis. In another example, the allocation module 34 gathers information from the monitoring module regarding current control traffic load conditions and compares that to the level used to set the current backhaul resource allocation. If a difference between the control traffic conditions is sufficient to warrant a change in the backhaul resource allocation (i.e., the difference exceeds a preselected threshold), the allocation module 34 makes a new allocation. Those skilled in the art who have the benefit of this description will be able to decide how often to automatically adjust an allocation of the backhaul resource for handling control traffic to meet their particular needs.

Once the appropriate amount of the backhaul resources is allocated to carrying control traffic, the allocation module 34 automatically allocates the remaining bandwidth or backhaul resource to bearer traffic (i.e., voice or data communications). In one example, given the current allocations, any bearer traffic that would compromise the quality of service requirements or that would cause backhaul overload is rejected. As the allocation of the backhaul resource for control traffic is automatically updated, the bandwidth available for bearer traffic changes and the amount of bearer traffic that can be carried at any given time changes. The illustrated example includes the ability to determine how much bearer traffic is acceptable given quality of service requirements and the amount of backhaul resource available for the bearer traffic.

By automatically allocating an amount of the backhaul resource for carrying control traffic, the illustrated example avoids the shortcomings associated with systems that have rigid segmentation of backhaul resources dedicated to carrying only bearer traffic or only control traffic. Moreover, there is no wasted resource by having too much of the available bandwidth dedicated to carrying control traffic. Further, the illustrated example allows for dynamically adjusting the amount of the backhaul resource reserved for control traffic to respond to differing control traffic requirements as conditions may change.

In some examples, the allocations and management of the backhaul resource are designed to provide higher priority to at least a certain amount of control traffic, which is based on the determined amount of experienced control traffic. In other examples, the allocation and management of the backhaul resource are designed to provide higher priority to at least a certain amount of bearer traffic, which is based on selected quality of service requirements.

The illustrated example also includes a transport module 36 that facilitates multiplexed communication of the control traffic and the bearer traffic on the backhaul network 26. In one example, the transport module 36 provides a quality of service transport such as the known DiffServ transport for the bearer and control traffic on the backhaul network 26. One example includes a multi-homing solution such as the known SCTP solution for maximizing the signaling reliability in case of facility or node failures. Additionally, in one example a link sharing mechanism is employed on each facility interface with bearer traffic having a higher quality of service class than that associated with the control traffic. At the same time, in one example, a selected amount of bandwidth is allocated to the control traffic on each facility interface so that even in the case of facility failure or reduced bandwidth, the control traffic will not be severely congested and will not be essentially blocked behind bearer traffic. In one example, in the event that there is some unexpected facility bandwidth reduction due to failures, the system will initiate forced call termination for selected calls to relieve the congestion. The link sharing quality of service scheme for each facility together with the multi-homing transport strategy optimizes the reliability of control traffic communication in the case of any backhaul facility or node failures without degrading the transport efficiency.

The example bandwidth reservation scheme based upon dynamically and automatically adjusting the amount of backhaul resource allocated for control traffic together with the link sharing quality of service scheme provides a flexible and robust transport system for bearer traffic and control traffic on the backhaul network 26. In the disclosed example, the bearer resource allocation process takes control traffic allocation into account and, therefore, minimizes the chance of consistent congestion on the backhaul facility. At the same time, control traffic and possibly bearer traffic can be bursty in nature such that the link sharing scheme with the quality of service scheme maximize the backhaul resource utilization and optimize the per-traffic class performance.

Another advantage of the disclosed example is that it removes the burden of configuring or designing a backhaul network for carrying a certain amount of control traffic for all situations. The automatic and dynamic allocation process of the disclosed example ensures long term optimization of backhaul transport efficiency and more readily facilitates traffic growth and network growth.

The preceding description is exemplary rather than limiting in nature. Variations and modifications to the disclosed examples may become apparent to those skilled in the art that do not necessarily depart from the essence of this invention. The scope of legal protection given to this invention can only be determined by studying the following claims.

## Claims

1. A method of communicating, comprising:
automatically adjusting an allocation of a backhaul resource for handling control traffic.

2. The method of claim 1, comprising automatically adjusting the allocation responsive to an amount of control traffic.

3. The method of claim 2, comprising:
monitoring the amount of control traffic;
determining an amount of the backhaul resource for handling an amount of control traffic corresponding to the monitored amount of control traffic; and
adjusting the allocation to correspond to the determined amount of the backhaul resource.

4. The method of claim 1, wherein the backhaul resource has a capacity and comprising automatically allocating a remainder of the capacity for handling bearer traffic wherein the remainder is the difference between the allocation for handling control traffic and the capacity.

5. The method of claim 1, comprising multiplexing the control traffic with other traffic on the backhaul resource and wherein the other traffic comprises at least one of a voice or data communication.

6. The method of claim 1, comprising:
determining an amount of bearer traffic that can be handled based upon the allocation of the backhaul resource for handling control traffic; and
maintaining an amount of bearer traffic corresponding to the determined amount.

7. The method of claim 6, comprising refusing an additional call if the bearer traffic capacity corresponds to a current amount of bearer traffic.

8. The method of claim 1, comprising allocating at least a minimum amount of bandwidth for handling the control traffic at a facility interface associated with the backhaul resource.

9. The method of claim 1, comprising:
determining a capacity for and amount of control traffic that can be handled based upon the allocation of the backhaul resource for handling control traffic; and
refusing an additional call if the control traffic capacity corresponds to a current amount of control traffic.

10. The method of claim 1, comprising allocating at least a minimum amount of bandwidth for handling bearer traffic at a facility interface associated with the backhaul resource.
